(19) Europäisches Patentamt
European Patent Office
Office européen des brevets

(11) EP 3 048 464 A1

(12) EUROPEAN PATENT APPLICATION

(43) Date of publication:
27.07.2016 Bulletin 2016/30

(51) Int Cl.:
G02B 13/00 (2006.01)    G02B 9/60 (2006.01)

(21) Application number: 16150697.7

(22) Date of filing: 08.01.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 20.01.2015 KR 20150009339

(71) Applicant: Samsung Electronics Co., Ltd.
Gyeonggi-do 16677 (KR)

(72) Inventors:
• SEO, Jung-pa
  Gyeonggi-do (KR)
• LEE, Tae-youn
  Gyeonggi-do (KR)
• KIM, Yong-wook
  Gyeonggi-do (KR)

(74) Representative: Appleyard Lees IP LLP
15 Clare Road
Halifax HX1 2HY (GB)

(54) IMAGING LENS AND IMAGING APPARATUS INCLUDING THE SAME

(57) An imaging lens includes a first lens having a convex surface toward an object and positive refractive power, a second lens having positive or negative refractive power, a third lens having positive or negative refractive power, a fourth lens having a convex surface toward an image plane and positive refractive power, and a fifth lens having a concave surface toward an object and negative refractive power. The first through fifth lenses are arranged in order from an object to an image plane. The imaging lens satisfies the condition

$$-0.2 \leq (Y-y_p)/y_p \leq -0.05,$$

wherein Y indicates an image height of a real chief ray, and $y_p$ indicates an image height of a paraxial chief ray.

FIG. 1

Printed by Jouve, 75001 PARIS (FR)

## Description

This application claims the benefit of Korean Patent Application No. 10-2015-0009339, filed on January 20, 2015, in the Korean Intellectual Property Office, the disclosure of which is incorporated herein in its entirety by reference.

## BACKGROUND

The present disclosure relates to an imaging lens and an imaging apparatus including the same.

Digital cameras and video cameras including solid-state imaging devices, such as a charge-coupled device (CCD) or complementary metal-oxide semiconductor (CMOS) are widely used.

Imaging apparatuses that include solid-state imaging devices are useful as they can be miniaturized. Recently, solid-state imaging devices have been applied to mobile devices such as smartphones.

As the thicknesses of smartphones decrease, reducing the sizes of imaging lens modules used in the smartphones is becoming more important. Also, due to the increasing number of consumers with camera expertise, it is necessary to miniaturize the imaging lens as well as provide a design for guaranteeing satisfactory optical performance of the imaging lens according to the purpose of use.

## SUMMARY

Provided are a micro imaging lens that may be used in a slim mobile device and an imaging apparatus including the micro imaging lens.

Additional aspects will be set forth in part in the description which follows and, in part, will be apparent from the description, or may be learned by practice of the presented exemplary embodiments.

According to an aspect of an exemplary embodiment, an imaging lens includes a first lens having a convex surface toward an object and positive refractive power, a second lens having positive or negative refractive power, a third lens having positive or negative refractive power, a fourth lens having a convex surface toward an image plane and positive refractive power, and a fifth lens having a concave surface toward an object and negative refractive power. The first through fifth lenses are arranged in order from an object to an image plane, and the imaging lens satisfies $-0.2 \leq (Y-y_p)/y_p \leq -0.05$, wherein Y indicates an image height of a real chief ray, and $y_p$ indicates an image height of a paraxial chief ray.

The imaging lens may satisfy $0.8 < TL/f < 1.5$, wherein TL indicates a distance along an optical axis between a vertex of the object side surface of the first lens to the image plane, and f indicates a focal length of the imaging lens.

The imaging lens may satisfy $0.7 < f/f4 < 2.5$, wherein f indicates a focal length of the imaging lens, and f4 indicates a focal length of the fourth lens.

The imaging lens may satisfy $1.0 < |f/f5| < 4.0$, wherein f indicates a focal length of the imaging lens, and f5 indicates a focal length of the fifth lens.

The imaging lens may satisfy $0.2 < R1/f < 1.0$, wherein R1 indicates a radius of curvature of the object side surface of the first lens, and f indicates a focal length of the imaging lens.

The imaging lens may satisfy $f/EPD \leq 2.5$, wherein f indicates a focal length of the imaging lens, and EPD indicates a diameter of an entrance pupil of the imaging lens.

One of the second and third lenses may have positive refractive power and another may have negative refractive power.

The imaging lens may satisfy $1.6 \leq N_{1-4} \leq 2.2$ and $15 \leq V_{1-4} \leq 29$, wherein $N_{1-4}$ and $V_{1-4}$ respectively are a refractive index and an Abbe number of a lens having negative refractive power from among the second lens and the third lens.

The imaging lens may satisfy $1.51 < N_5 < 1.56$, wherein $N_5$ indicates a refractive index of the fifth lens.

Each of the first to fifth lenses may have at least one aspheric surface.

An image side surface of the fifth lens may have an aspheric surface without an inflection point.

According to an aspect of another exemplary embodiment, an imaging lens includes a first lens having a convex surface toward an object and positive refractive power, a second lens having positive or negative refractive power, a third lens having positive or negative refractive power, a fourth lens having a convex surface toward an image plane and positive refractive power, and a fifth lens having a concave surface toward an object and negative refractive power. The first through fifth lenses are arranged in order from an object to an image plane, and the imaging lens satisfies: $30° \leq CRA_{max} \leq 45°$ and $0.5 < TL/(2*y_p) < 0.75$, wherein $CRA_{max}$ indicates the maximum value of a chief ray angle (CRA) incident to the image plane according to image heights, TL indicates a distance along the optical axis between a vertex of an object side surface of the first lens to the image, and $y_p$ indicates an image height of a paraxial chief ray.

The imaging lens may satisfy $-20 \leq (((1/f) * (Y/tan\theta)-1)) * 100 \leq -5$, wherein f indicates a focal length of the imaging lens, Y indicates an image height of a real chief ray, and $\theta$ indicates a half field of view.

The imaging lens may satisfy $-1.6 < (R_9 + R_{10})/(R_9 - R_{10}) < -0.7$, wherein $R_9$ indicates a radius of curvature of an object side surface of the fifth lens, and $R_{10}$ indicates a radius of curvature of an image side surface of the fifth lens.

One of the second and third lenses may have positive refractive power and another may have negative refractive power.

The imaging lens may satisfy $1.6 \leq N_{1-4} \leq 2.2$ and $15 \leq V_{1-4} \leq 29$, wherein $N_{1-4}$ and $V_{1-4}$ respectively are a refractive index and an Abbe number of a lens having negative refractive power from among the second lens and the third lens.

Each of the first to fifth lenses may have at least one aspheric surface.

The image side surface of the fifth lens may be an aspheric surface without an inflection point.

BRIEF DESCRIPTION OF THE DRAWINGS

These and/or other aspects will become apparent and more readily appreciated from the following description of the exemplary embodiments, taken in conjunction with the accompanying drawings in which:

FIG. 1 is a diagram of an optical arrangement of an imaging lens, according to a first exemplary embodiment;

FIG. 2 is a conceptual diagram for describing negative distortion;

FIG. 3 is a conceptual diagram for describing a chief ray angle (CRA);

FIG. 4 is an aberration diagram of longitudinal spherical aberration, astigmatic field curvature, and distortion of an imaging lens, according to the first exemplary embodiment;

FIG. 5 is an aberration diagram of comatic aberration of an imaging lens, according to the first exemplary embodiment;

FIG. 6 is a diagram of negative TV distortion of an imaging lens, according to the first exemplary embodiment;

FIG. 7 is a graph of a CRA per field of an imaging lens, according to the first exemplary embodiment;

FIG. 8 is a diagram of an optical arrangement of an imaging lens, according to a second exemplary embodiment;

FIG. 9 is an aberration diagram of longitudinal spherical aberration, astigmatic field curvature, and distortion of an imaging lens, according to the second exemplary embodiment;

FIG. 10 is an aberration diagram of comatic aberration of an imaging lens, according to the second exemplary embodiment;

FIG. 11 is a diagram of negative TV distortion of an imaging lens, according to the second exemplary embodiment;

FIG. 12 is a graph of a CRA per field of an imaging lens, according to the second exemplary embodiment;

FIG. 13 is a diagram of an optical arrangement of an imaging lens, according to a third exemplary embodiment;

FIG. 14 is an aberration diagram of longitudinal spherical aberration, astigmatic field curvature, and distortion of an imaging lens, according to the third exemplary embodiment;

FIG. 15 is an aberration diagram of comatic aberration of an imaging lens, according to the third exemplary embodiment;

FIG. 16 is a diagram of negative TV distortion of an imaging lens, according to the third exemplary embodiment;

FIG. 17 is a graph of a CRA per field of an imaging lens, according to the third exemplary embodiment;

FIG. 18 is a diagram of an optical arrangement of an imaging lens, according to a fourth exemplary embodiment;

FIG. 19 is an aberration diagram of longitudinal spherical aberration, astigmatic field curvature, and distortion of an imaging lens, according to the fourth exemplary embodiment;

FIG. 20 is an aberration diagram of comatic aberration of an imaging lens, according to the fourth exemplary embodiment;

FIG. 21 is a diagram of negative TV distortion of an imaging lens, according to the fourth exemplary embodiment;

FIG. 22 is a graph of a CRA per field of an imaging lens, according to the fourth exemplary embodiment;

FIG. 23 is a diagram of an optical arrangement of an imaging lens, according to a fifth exemplary embodiment;

FIG. 24 is an aberration diagram of longitudinal spherical aberration, astigmatic field curvature, and distortion of an imaging lens, according to the fifth exemplary embodiment;

FIG. 25 is an aberration diagram of comatic aberration of an imaging lens, according to the fifth exemplary embodiment;

FIG. 26 is a diagram of negative TV distortion of an imaging lens, according to the fifth exemplary embodiment;

FIG. 27 is a graph of a CRA per field of an imaging lens, according to the fifth exemplary embodiment; and

FIG. 28 is a perspective view of an electronic device according to an exemplary embodiment.

## DETAILED DESCRIPTION

Reference will now be made in detail to exemplary embodiments, examples of which are illustrated in the accompanying drawings. Expressions such as "at least one of," when preceding a list of elements, modify the entire list of elements and do not modify the individual elements of the list.

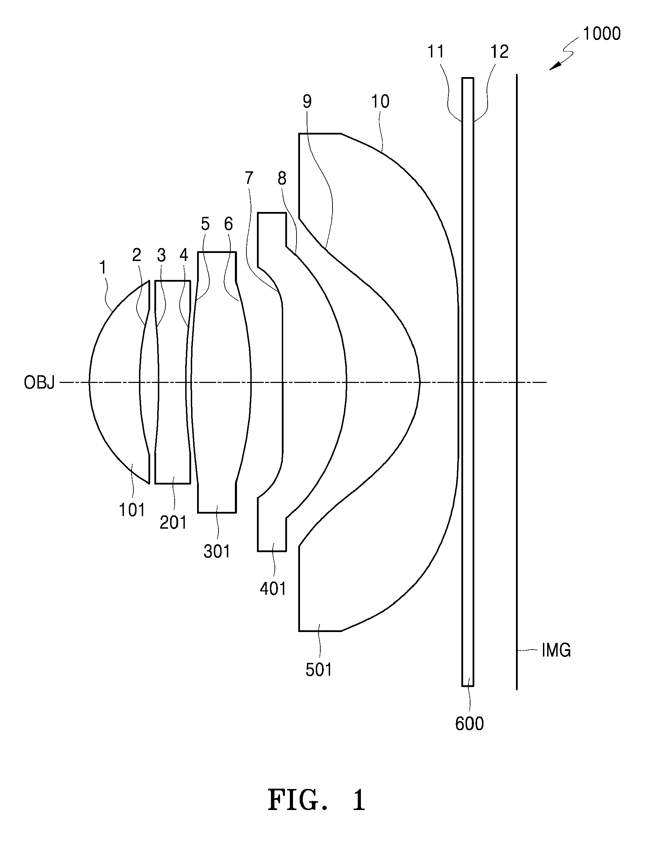

FIG. 1 is a diagram of an optical arrangement of an imaging lens 1000, according to a first exemplary embodiment.

The imaging lens 1000 may include, sequentially from an object OBJ to an image plane IMG, a first lens 101 having a convex surface toward object side and positive refractive power, a second lens 201 having negative refractive power, a third lens 301 having positive refractive power, a fourth lens 401 having a convex surface toward image plane IMG and positive refractive power, and a fifth lens 501 having negative refractive power.

A filter 600 may be provided between the fifth lens 501 and the image plane IMG. The filter 600 may be, for example, an infrared light blocking filter. The filter 600 may be optional. A cover glass may be provided with the filter 600 or selectively.

The imaging lens 1000 may determine details of the first to fifth lenses 101 to 501 such that a total length is reduced and satisfactory optical performance is provided. Each of the first lens 101, the second lens 201, the third lens 301, the fourth lens 401, and the fifth lens 501 may include an aspheric surface for aberration correction. For example, at least one surface of each of the first lens 101, the second lens 201, the third lens 301, the fourth lens 401, and the fifth lens 501 may be an aspheric surface. Alternatively, an image side surface of the fifth lens 501 may be an aspheric surface without an inflection point.

The imaging lens 1000 may satisfy the following condition, COND. (1):

$$-0.2 \le (Y-y_p)/y_p \le -0.05, \qquad\qquad COND. (1)$$

wherein Y indicates an image height of a real chief ray, i.e., an actual image height, and $y_p$ indicates an image height of a paraxial chief ray.

According to COND. (1), the imaging lens 1000 has negative optical distortion and thus the size of the imaging lens 1000 is reduced.

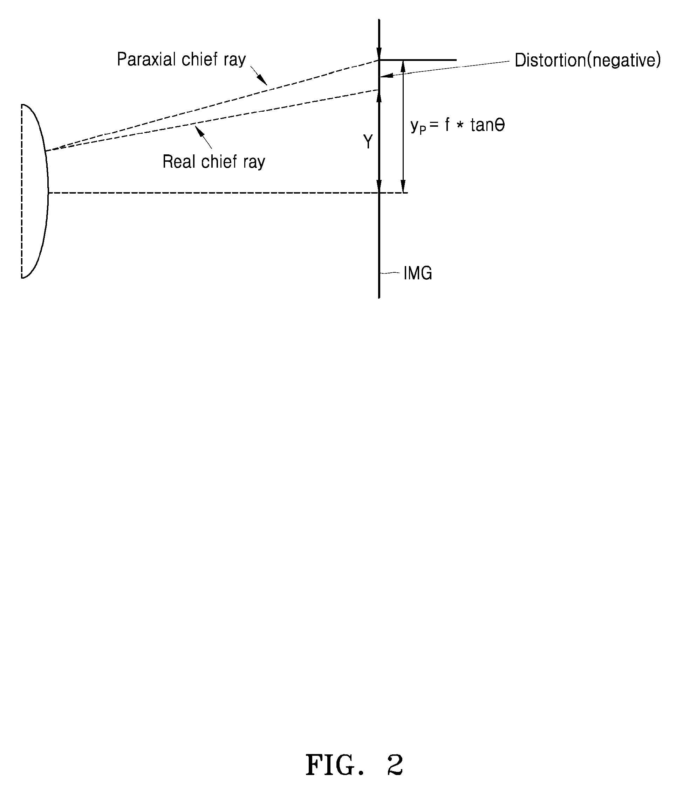

FIG. 2 is a conceptual diagram for describing negative distortion. Referring to FIG. 2, negative distortion implies that the actual image height (Y) is lower than the image height of the paraxial chief ray ($y_p$). When COND. (1) is satisfied, the actual image height may be lower than a height of an image sensor provided at the image plane IMG. Thus, the total length of the imaging lens 1000 may be reduced. Also, the optical distortion may be corrected. Unlike a general imaging lens having optical distortion of $\pm 2\%$, the present exemplary embodiment may reduce size because an optical distortion of up to -20% is allowed.

The condition, COND. (1) may be modified as below by using $y_p = f*\tan\theta$:

$$-20 \leq (((1/f) * (Y/\tan\theta)-1)) * 100 \leq -5, \qquad \text{COND. (2)}$$

wherein f indicates a focal length of the imaging lens 1000, Y indicates the image height of the real chief ray, and θ indicates a half field of view.

The imaging lens 1000 may satisfy COND. (3):

$$0.8 < TL/f < 1.5, \qquad \text{COND. (3)}$$

wherein TL indicates the total length, i.e., a distance along an optical axis between a vertex of the object side surface of the first lens 101 to the image plane IMG, and f indicates the focal length of the imaging lens 1000.

When a filter, for example, an infrared light blocking filter or a cover glass, is provided on the optical axis, an air reduced value is applied for TL. That is, when a refractive index and a thickness of the filter 600 are n and d, respectively, the value of (1-(1/n))*d is applied when calculating TL.

The condition, COND. (3) may ensure optimization between size reduction and aberration correction.

When the value of TL/f exceeds an upper limit, aberration correction along the optical axis or not along the optical axis may be satisfactory but size reduction may be difficult due to a long total length.

When the value of TL/f exceeds a lower limit, size reduction may be satisfactory but manufacturing of lenses may be difficult due to reduction in thicknesses of the lenses. Also, productivity may decrease due to increasing sensitivity to manufacturing error.

The imaging lens 1000 may satisfy the following condition, COND. (4):

$$0.7 < f/f4 < 2.5, \qquad \text{COND. (4)}$$

wherein f indicates the focal length of the imaging lens 1000, and f4 indicates the focal length of the fourth lens 401.

The imaging lens 1000 may also satisfy the following condition, COND. (5):

$$1.0 < |f/f5| < 4.0, \qquad \text{COND. (5)}$$

wherein f indicates the focal length of the imaging lens 1000, and f5 indicates the focal length of the fifth lens 501.

The conditions, COND. (4) and COND. (5) determine an appropriate range of respective refractive powers of the fourth and fifth lenses 401 and 501 with regard to correction of astigmatic field curvature aberration. That is, when the condition, COND. (4) and COND. (5), are not satisfied, it is difficult to correct the astigmatic field curvature aberration.

The imaging lens 1000 may satisfy the following condition, COND. (6):

$$0.2 < R1/f < 1.0, \qquad \text{COND. (6)}$$

wherein R1 indicates a radius of curvature of the object side surface of the first lens 101, and f indicates the focal length of the imaging lens 1000.

The condition, COND. (6) determines a ratio of the radius of curvature of the object side surface of the first lens 101 to the focal length of the imaging lens 1000. The condition, COND. (6) is provided for appropriate correction of spherical aberration. That is, when the condition, COND. (6) is not satisfied, the spherical aberration increases.

The imaging lens 1000 may satisfy the following condition, COND. (7):

$$f/EPD \leq 2.5, \qquad \text{COND. (7)}$$

wherein f indicates the focal length of the imaging lens 1000, and EPD indicates an entrance pupil diameter of the imaging lens 1000.

The condition, COND. (7) is related to the F-number and is provided for manufacturing a bright lens with small total length.

The imaging lens 1000 may satisfy the following conditions, COND. (8) and COND. (9):

$$1.6 \le N_{1-4} \le 2.2, \qquad\qquad \text{COND. (8)}$$

$$15 \le V_{1-4} \le 29, \qquad\qquad \text{COND. (9)}$$

wherein $N_{1-4}$ and $V_{1-4}$ respectively are a refractive index and the Abbe number of a lens having negative refractive power, from among the second lens 201 and the third lens 301.

The conditions, COND. (6) and COND. (9) are for correcting longitudinal color aberration along an axis. The total length may be reduced and longitudinal color aberration may be corrected by determining the refractive index and the Abbe number of the lens having negative refractive power from among the second lens 201 and the third lens 301 based on the conditions, COND. (6) and COND. (9).

The imaging lens 1000 may satisfy the following condition, COND. (10):

$$1.51 < N_5 < 1.56, \qquad\qquad \text{COND. (10)}$$

wherein $N_5$ indicates a refractive index of the fifth lens 501.

The condition, COND. (10) is related to the refractive index of the fifth lens 501, for example, a d-line refractive index. A material of the fifth lens 501 may be selected based on the condition, COND. (10). Such a range of the refractive index may be obtained by using a plastic material. Accordingly, manufacturing costs may be reduced, manufactured products may be light-weight, and manufacturing of lenses may be more convenient.

The imaging lens 1000 may satisfy the following condition, COND. (11):

$$30° \le CRA_{max} \le 45°, \qquad\qquad \text{COND. (11)}$$

wherein $CRA_{max}$ indicates the maximum value of a chief ray angle (CRA) incident to the image plane IMG according to image heights.

The condition, COND. (11) determines a range of the maximum value of the CRA of chief rays incident on the image plane IMG.

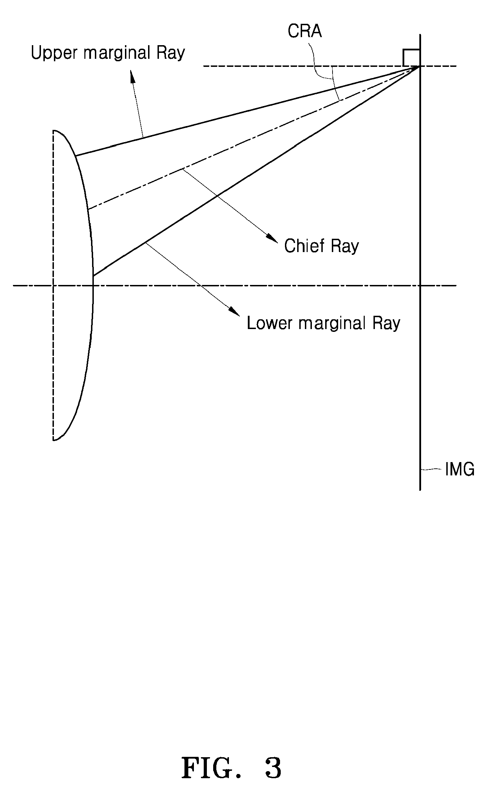

FIG. 3 is a conceptual diagram for describing a CRA.

The CRA of chief rays traveling toward the image plane IMG varies according to image heights. When the maximum value of the CRA satisfies the condition, COND. (11), the imaging lens 1000 may be reduced in size, and a wide angle may be obtained. Also, based on the condition, COND. (11), a surface of the fifth lens 501 facing image plane IMG, which is located nearest to the image plane IMG in the imaging lens 1000, may be formed as an aspheric surface with no inflection points.

The imaging lens 1000 may satisfy the following condition, COND. (12):

$$0.5 < TL/(2^*y_p) < 0.75, \qquad\qquad \text{COND. (12)}$$

wherein TL indicates a distance along the optical axis between the vertex of a surface of the first lens 101 facing the object to the image plane IMG, and $y_p$ indicates the image height of the paraxial chief ray.

Similar to the condition, COND. (3), when a filter is provided on the optical axis, an air reduced value is applied for TL.

The condition, COND. (12) is for reducing the total length of the imaging lens 1000.

The imaging lens 1000 may satisfy the following condition, COND. (13):

$$-1.6 < (R_9 + R_{10})/(R_9 - R_{10}) < -0.7, \qquad\qquad \text{COND. (13)}$$

wherein $R_9$ indicates a radius of curvature of an object side surface of the fifth lens 501, and $R_{10}$ indicates a radius of curvature of the image side surface of the fifth lens 501.

Based on the condition, COND. (13), the fifth lens 501 may be formed to have an aspheric surface, in which the object side surface is concave and the image side surface has no inflection points.

Hereinafter, various exemplary embodiments will be described with lens data. In the lens data, ST indicates aperture stop, and an asterisk "*" behind the number of a surface indicates that the surface is an aspheric surface. Millimeter "mm" is used as the unit of focal lengths, overall optical lengths, radius of curvatures, thicknesses, and intervals.

An aspheric surface is defined as below:

$$Z = \frac{cY^2}{1+\sqrt{1-(1+K)c^2Y^2}} + AY^4 + BY^6 + CY^8 + DY^{10} + EY^{12} + FY^{14} \qquad \text{EQN. (1)}$$

wherein Z indicates a distance from a vertex of a lens in a direction along an optical axis, Y indicates a distance in a direction perpendicular to the optical axis, K is a conic constant, A to F are aspheric surface parameters, and c indicates a reciprocal for a radius of curvature (1/R) with regard to the vertex of the lens.

First Exemplary Embodiment

FIG. 1 is a diagram of an optical arrangement of the imaging lens 1000, according to the first exemplary embodiment.

The imaging lens 1000 may include, sequentially from the object OBJ to the image plane IMG, the first lens 101 having the convex surface toward object and positive refractive power, the second lens 201 having negative refractive power, the third lens 301 having positive refractive power, the fourth lens 401 having the convex surface toward image plane and positive refractive power, and the fifth lens 501 having negative refractive power.

Lens data of the first exemplary embodiment is as below.

[Table I]

|  | Radius of Curvature | Thickness or Intervals | Refractive Index (nd) | Abbe Number (vd) |
|---|---|---|---|---|
| OBJ | infinity | infinity |  |  |
| 1(ST)* | 1.504 | 0.548 | 1.544 | 56.09 |
| 2* | 3.845 | 0.200 |  |  |
| 3* | -56.019 | 0.300 | 2.017 | 20.55 |
| 4* | 7.522 | 0.069 |  |  |
| 5* | 6.272 | 0.661 | 1.531 | 55.91 |
| 6* | -7.835 | 0.356 |  |  |
| 7* | 182.130 | 0.697 | 1.544 | 56.09 |
| 8* | -2.205 | 0.809 |  |  |
| 9* | -1.115 | 0.450 | 1.544 | 56.09 |
| 10* | infinity | 0.040 |  |  |
| 11 | infinity | 0.100 | 1.517 | 64.2 |
| 12 | infinity | 0.498 |  |  |
| IMG | infinity | 0.000 |  |  |

[Table II]

| Surface | K | A | B | C | D | E | F | G |
|---|---|---|---|---|---|---|---|---|
| 1 | 2.5030E-01 | 5.0750E-04 | 2.1320E-02 | -1.2843E-02 | 1.4129E-02 | 2.8946E-03 | 1.0022E-02 | 3.5333E-03 |
| 2 | -2.2136E+01 | 5.0897E-02 | -2.1860E-02 | 5.6641E-02 | -1.0407E-01 | 9.0643E-02 | 8.8656E-03 | 2.0839E-04 |
| 3 | -1.0000E+00 | -3.8435E-02 | 7.9805E-03 | -1.9296E-02 | 9.9303E-03 | -1.3943E-02 | -1.4055E-03 | 3.5919E-05 |
| 4 | -1.4554E+01 | -9.2113E-03 | 4.4310E-02 | -2.4070E-02 | 9.3174E-03 | 9.6466E-03 | -8.7822E-03 | 5.3190E-03 |
| 5 | -9.9000E+01 | 1.2121E-02 | 1.2872E-02 | -3.5254E-02 | 1.0847E-02 | 4.0602E-02 | -2.9108E-02 | -1.3178E-04 |
| 6 | 1.5280E+00 | -4.1218E-02 | -1.3884E-02 | 7.9787E-03 | -6.4351E-03 | -2.6739E-03 | 5.5963E-04 | 2.5253E-03 |
| 7 | -1.0000E+00 | -4.3583E-02 | -2.2731E-02 | 8.3023E-03 | -1.3499E-02 | 3.0683E-03 | 2.0186E-03 | -1.8610E-03 |
| 8 | -8.2777E+00 | -9.0500E-02 | 2.7321E-02 | -1.6503E-02 | 5.0236E-03 | -5.0365E-04 | 1.8073E-05 | 1.8348E-05 |
| 9 | -8.9642E-01 | -3.6557E-02 | 8.4515E-03 | 2.5892E-03 | 3.4904E-04 | 4.1019E-05 | -1.6004E-05 | -5.4632E-06 |
| 10 | 2.0022E+01 | -4.6098E-02 | 1.4122E-02 | -2.9295E-03 | 3.0833E-04 | -1.3471E-05 | -8.9154E-07 | 9.1418E-08 |

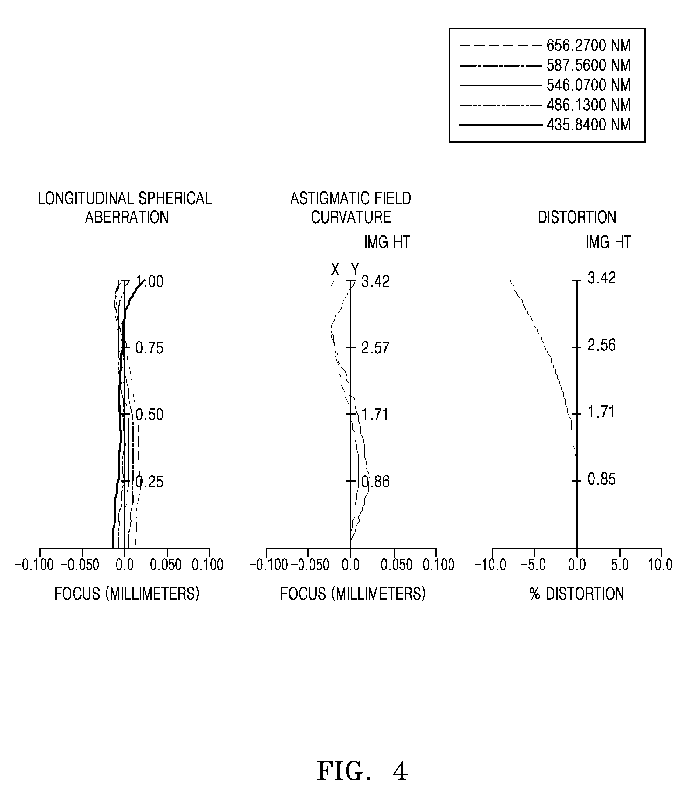

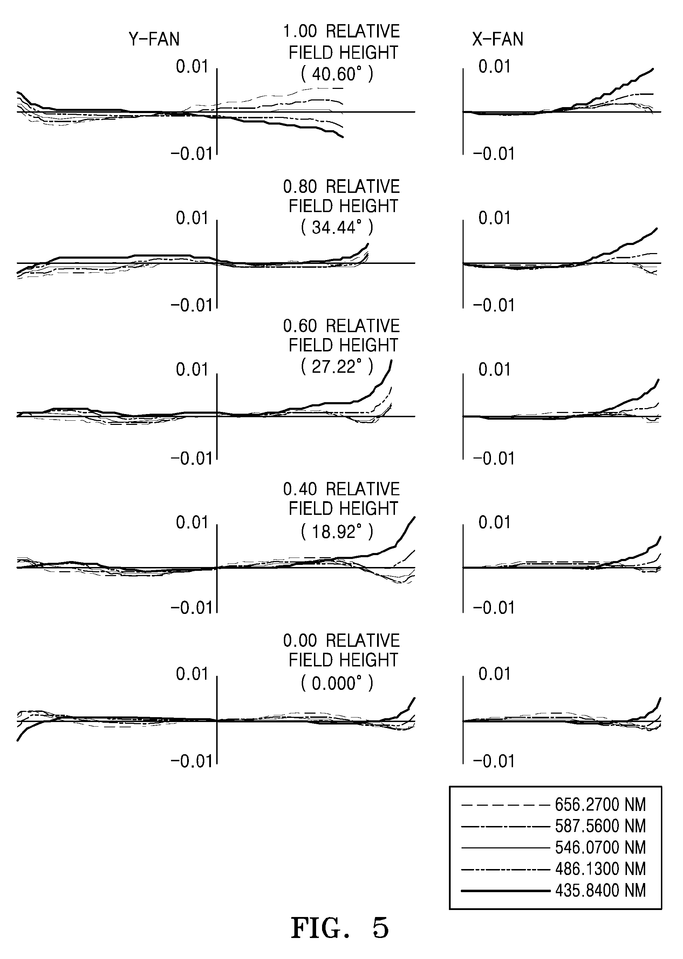

FIG. 4 is an aberration diagram of longitudinal spherical aberration, astigmatic field curvature, and distortion of the imaging lens 1000, according to the first exemplary embodiment. FIG. 5 is an aberration diagram of comatic aberration of the imaging lens 1000, according to the first exemplary embodiment. The longitudinal spherical aberration and the comatic aberration are shown with regard to rays with wavelengths of 656.27 nm, 587.56 nm, 546.07 nm, 486.13 nm, and 435.84 nm, and the astigmatic field curvature and the distortion are shown with regard to rays with a wavelength of 546.07 nm. Also, in a graph of the astigmatic field curvature, a sagittal field curvature and a tangential field curvature are respectively shown as X and Y.

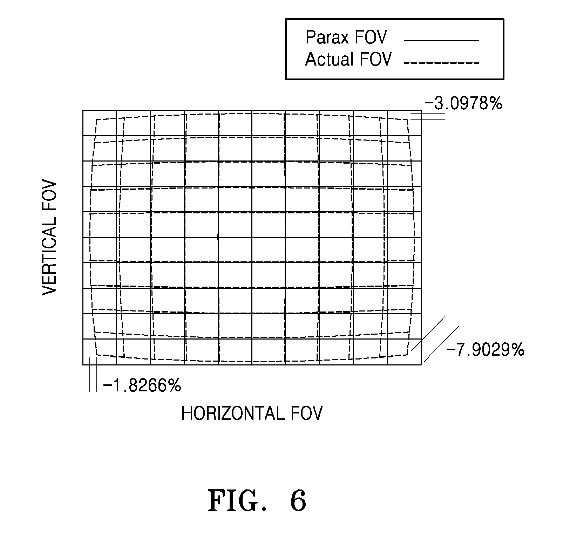

FIG. 6 is a diagram of negative TV distortion of the imaging lens 1000, according to the first exemplary embodiment.

Referring to FIG. 6, solid lines indicate a field of view (FOV) of paraxial chief rays, and dashed lines indicate an actual FOV. Due to negative optical distortion, the FOV indicated by the dashed lines has a barrel shape. The TV distortion may be calculated based on the distortion aberration diagram of FIG. 4. The TV distortion is a value obtained by subtracting a distortion aberration of 0.6F (short side) from a distortion aberration of 1.OF (diagonal direction) and dividing the subtracted value in half. The TV distortion is disclosed in the upper right corner. The lower left corner shows a value obtained by subtracting a distortion aberration of 0.8F (long side) from the distortion aberration of 1.0F (diagonal direction) and the subtracted value in half, and the lower right corner shows the optical distortion of FIG. 4.

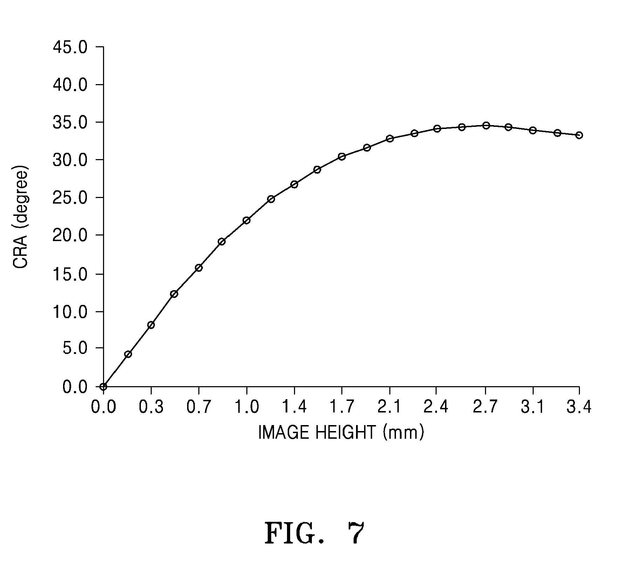

FIG. 7 is a graph of a CRA per field of the imaging lens 1000, according to the first exemplary embodiment.

Second Exemplary Embodiment

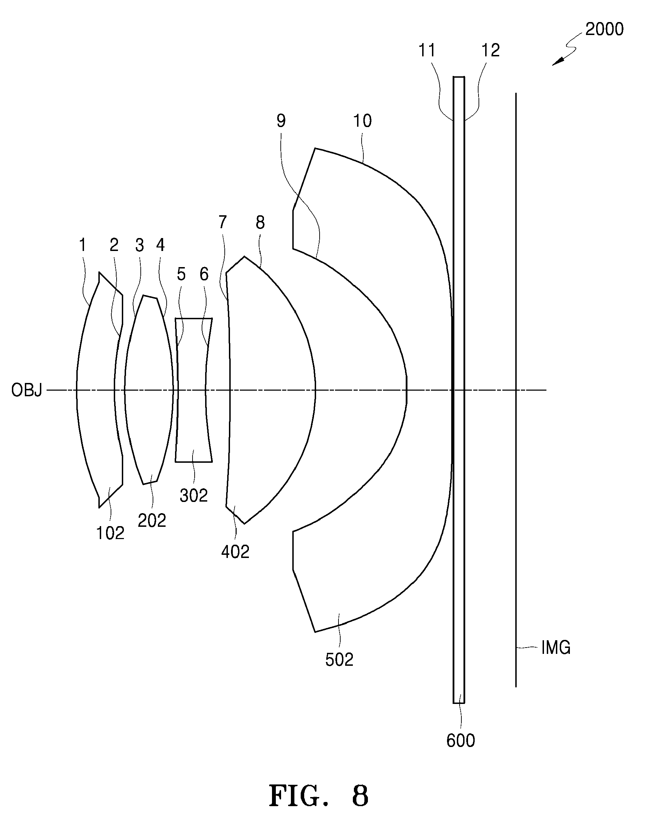

FIG. 8 is a diagram of an optical arrangement of an imaging lens 2000, according to a second exemplary embodiment.

The imaging lens 2000 includes, sequentially from an object OBJ to an image plane IMG, a first lens 102 having a convex surface toward object and positive refractive power, a second lens 202 having positive refractive power, a third lens 302 having negative refractive power, a fourth lens 402 having a convex surface toward image plane and positive refractive power, and a fifth lens 502 having negative refractive power.

Lens data of the second exemplary embodiment is as below.

[Table III]

|  | Radius of Curvature | Thickness or Intervals | Refractive Index (nd) | Abbe Number (vd) |
|---|---|---|---|---|
| OBJ | infinity | infinity |  |  |
| 1* | 2.171 | 0.382 | 1.544 | 56.11 |
| 2(ST)* | 2.648 | 0.110 |  |  |
| 3* | 2.971 | 0.490 | 1.535 | 55.71 |
| 4* | -4.351 | 0.030 |  |  |
| 5* | -64.663 | 0.300 | 1.643 | 22.4 |
| 6* | 3.654 | 0.244 |  |  |
| 7* | -82.393 | 0.868 | 1.544 | 56.11 |
| 8* | -1.467 | 0.916 |  |  |
| 9* | -1.091 | 0.450 | 1.544 | 56.11 |
| 10* | infinity | 0.030 |  |  |
| 11 | infinity | 0.100 | 1.517 | 64.20 |
| 12 | infinity | 0.530 |  |  |
| IMG | infinity | 0.000 |  |  |

[Table IV]

| surface | K | A | B | C | D | E | F | G |
|---|---|---|---|---|---|---|---|---|
| 1 | -1.3362E+00 | -2.9656E-02 | -4.6954E-04 | -1.7212E-02 | 8.8309E-02 | -9.6141E-02 | 4.4512E-02 | -1.2077E-02 |
| 2 | 5.8329E+00 | -1.0656E-01 | 4.3773E-02 | 3.1856E-02 | 9.5432E-02 | -2.1041E-03 | -3.7479E-08 | -9.5785E-08 |
| 3 | -1.0000E+00 | -3.7419E-02 | -1.4672E-03 | 1.1882E-01 | 7.9025E-02 | -1.0581E-01 | 2.0091E-03 | -4.6108E-09 |
| 4 | 1.8830E+01 | -8.2605E-02 | 4.4031E-02 | 3.0058E-01 | -2.9924E-01 | -6.0830E-02 | -2.2329E-03 | -5.3623E-03 |
| 5 | -1.0000E+00 | -1.3040E-01 | 1.2589E-01 | 1.3783E-01 | -1.7963E-01 | -4.8740E-02 | -3.6843E-02 | 1.5436E-03 |
| 6 | -1.0000E+00 | -2.7157E-02 | 1.6753E-02 | 6.3504E-02 | -7.4358E-02 | 3.7237E-02 | 1.1578E-02 | -2.1031E-02 |
| 7 | -1.0000E+00 | -1.6128E-02 | -3.1544E-02 | 4.2305E-03 | 1.1586E-02 | -8.4897E-03 | 6.0119E-03 | 1.0564E-03 |
| 8 | -5.4031E+00 | -1.6183E-01 | 9.1349E-02 | -6.1175E-02 | 1.3312E-02 | -1.6852E-05 | 2.6392E-04 | 3.9193E-04 |
| 9 | -1.5318E+00 | -3.4593E-02 | -3.1944E-02 | -1.1247E-02 | 7.0852E-03 | 6.7777E-04 | -6.0532E-04 | 9.7459E-05 |
| 10 | -1.0000E+00 | -1.4340E-02 | -5.1625E-03 | 4.5758E-04 | 1.9252E-05 | -1.6104E-05 | 3.8505E-06 | -5.4312E-07 |

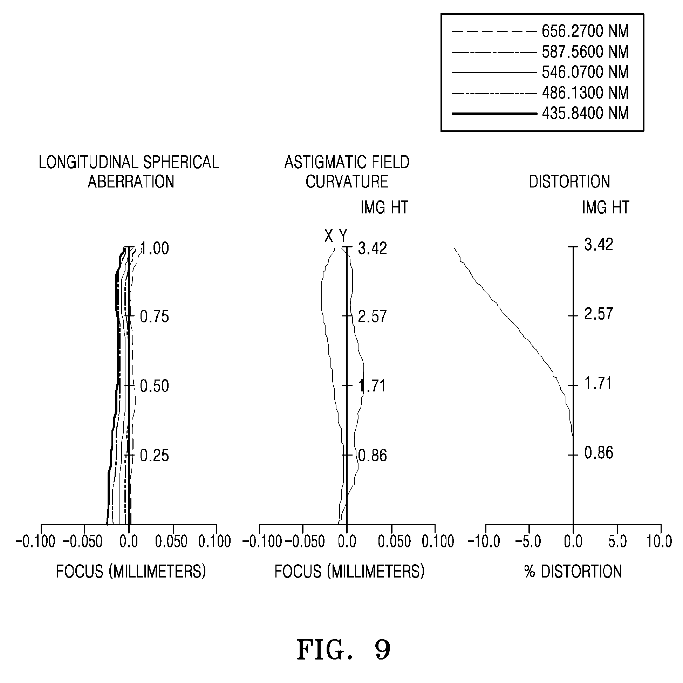

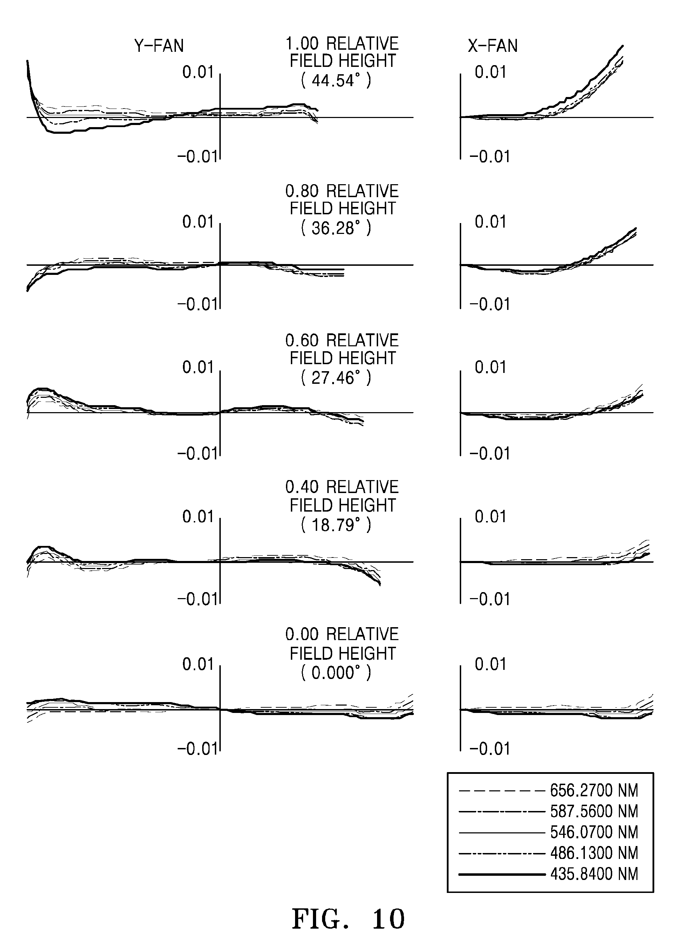

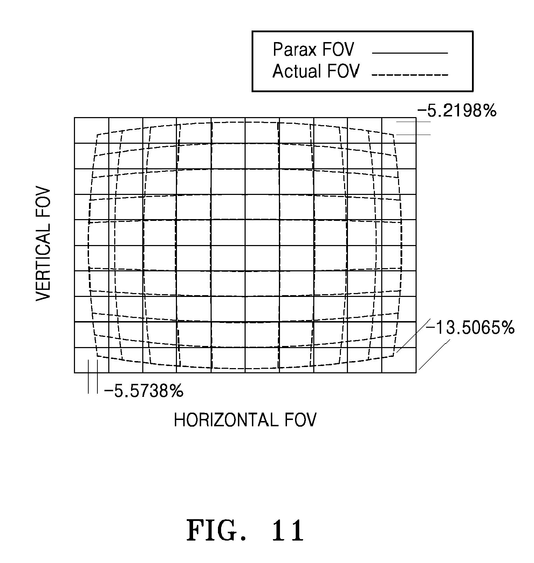

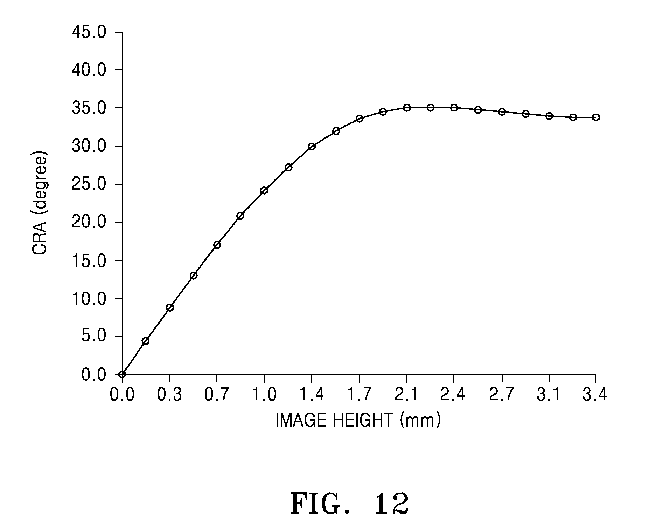

FIG. 9 is an aberration diagram of longitudinal spherical aberration, astigmatic field curvature, and distortion of the imaging lens 2000, according to the second exemplary embodiment. FIG. 10 is an aberration diagram of comatic aberration of the imaging lens 2000, according to the second exemplary embodiment. FIG. 11 is a diagram of negative TV distortion of the imaging lens 2000, according to the second exemplary embodiment. FIG. 12 is a graph of a CRA per field of the imaging lens 2000, according to the second exemplary embodiment.

Third Exemplary Embodiment

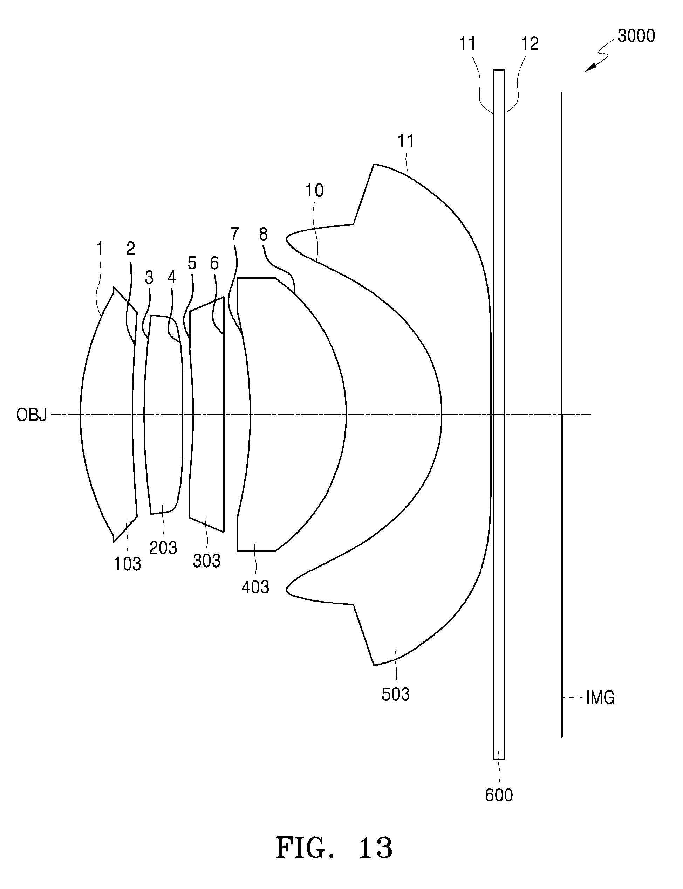

FIG. 13 is a diagram of an optical arrangement of an imaging lens 3000, according to a third exemplary embodiment.

The imaging lens 3000 includes, sequentially from the object OBJ to the image plane IMG, a first lens 103 having a convex surface toward object and positive refractive power, a second lens 203 having positive refractive power, a third lens 303 having negative refractive power, a fourth lens 403 having a convex surface toward image plane and positive refractive power, and a fifth lens 503 having negative refractive power.

Lens data of the third exemplary embodiment is as below.

[Table V]

|  | Radius of Curvature | Thickness or Intervals | Refractive Index (nd) | Abbe Number (vd) |
|---|---|---|---|---|
| OBJ | infinity | infinity |  |  |
| 1* | 1.781 | 0.478 | 1.544 | 56.11 |
| 2(ST)* | 4.933 | 0.110 |  |  |
| 3* | 7.284 | 0.359 | 1.531 | 55.75 |
| 4* | -17.375 | 0.084 |  |  |
| 5* | -10.686 | 0.300 | 2.100 | 16.8 |
| 6* | -107.497 | 0.236 |  |  |
| 7* | -7.343 | 0.903 | 1.659 | 57.65 |
| 8* | -1.579 | 0.869 |  |  |
| 9* | -1.088 | 0.450 | 1.544 | 56.11 |
| 10* | infinity | 0.030 |  |  |
| 11 | infinity | 0.100 | 1.517 | 64.20 |
| 12 | infinity | 0.530 |  |  |
| IMG | infinity | 0.000 |  |  |

[Table VI]

| Surface | K | A | B | C | D | E | F | G |
|---|---|---|---|---|---|---|---|---|
| 1 | -4.4559E-01 | -1.5144E-02 | -1.0171E-02 | -2.0113E-02 | 5.1822E-02 | -6.9813E-02 | 4.2710E-02 | -1.2077E-02 |
| 2 | 1.5673E+01 | -6.4609E-02 | 3.2940E-02 | 2.4176E-02 | -1.2432E-02 | -2.1041E-03 | -3.7477E-08 | -9.5785E-08 |
| 3 | -1.0000E+00 | -2.5892E-02 | 2.6738E-02 | 1.6349E-01 | -1.1080E-01 | -1.0581E-01 | 2.0091 E-03 | -4.6108E-09 |
| 4 | 1.5490E+02 | -1.1458E-01 | -9.7823E-03 | 2.8818E-01 | -2.5627E-01 | -6.0830E-02 | -2.2329E-03 | -5.3623E-03 |
| 5 | -1.0000E+00 | -8.1194E-02 | 4.1070E-02 | 4.7863E-02 | 3.4150E-02 | -4.8740E-02 | -3.6843E-02 | 1.5436E-03 |
| 6 | 1.0000E+00 | 4.9017E-03 | 1.1539E-02 | 4.9529E-02 | -5.1052E-02 | 4.4694E-02 | 1.2039E-02 | -2.1031E-02 |
| 7 | 3.4292E+00 | -2.0726E-02 | -1.9857E-02 | -3.1506E-02 | 5.8934E-03 | 9.9427E-03 | -1.0757E-02 | 2.9150E-03 |
| 8 | -5.8343E+00 | -1.5930E-01 | 8.3331E-02 | -5.9800E-02 | 1.2385E-02 | -8.1155E-04 | 8.1735E-04 | -7.4484E-04 |
| 9 | -8.1415E-01 | 5.6883E-03 | -2.5036E-02 | -7.8312E-03 | 1.3735E-03 | 5.5238E-04 | 9.6753E-05 | 1.3435E-04 |
| 10 | -1.0000E+00 | -2.5422E-02 | 2.0873E-03 | -1.6658E-03 | 2.7254E-04 | -1.8409E-05 | 2.5685E-06 | -5.5953E-07 |

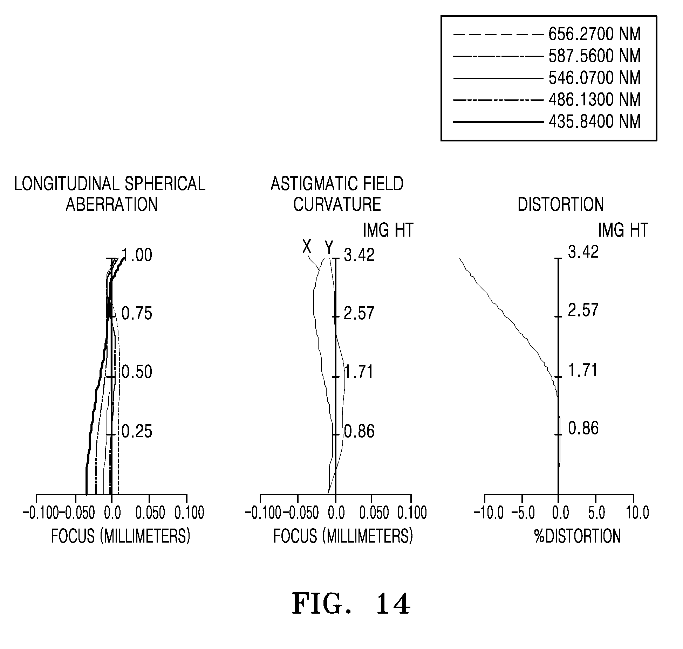

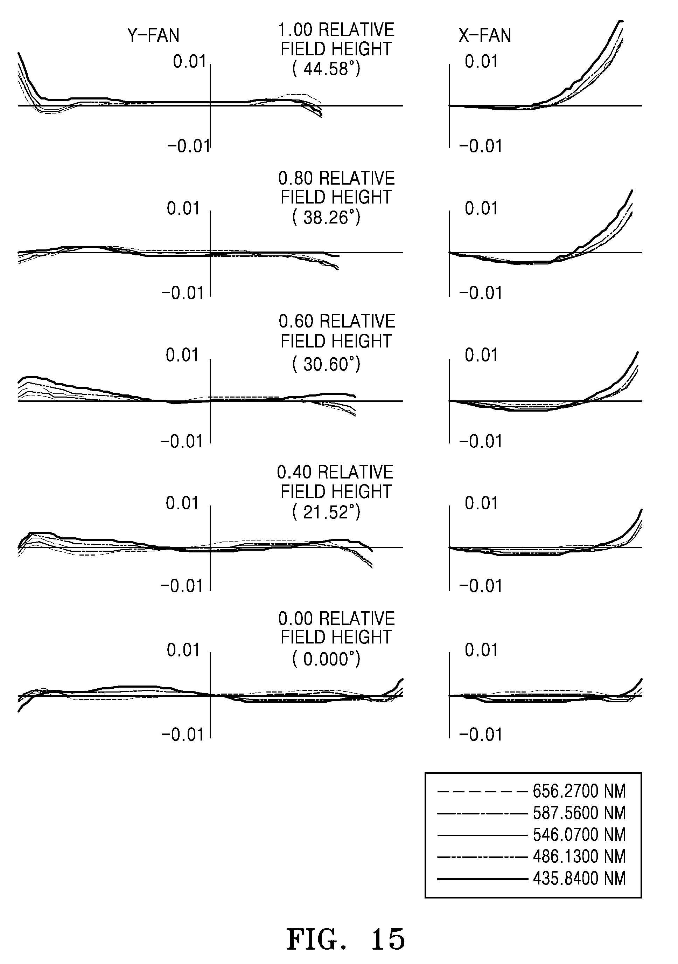

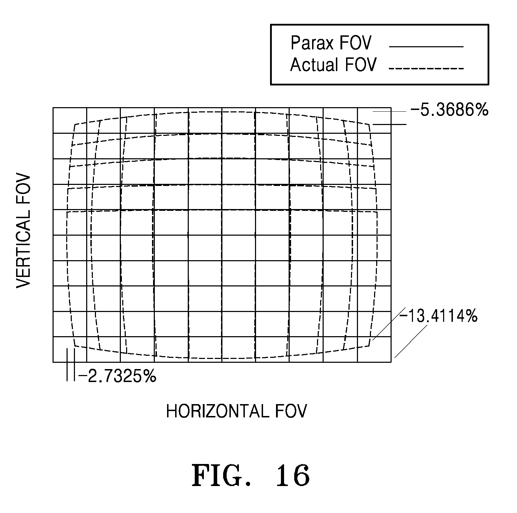

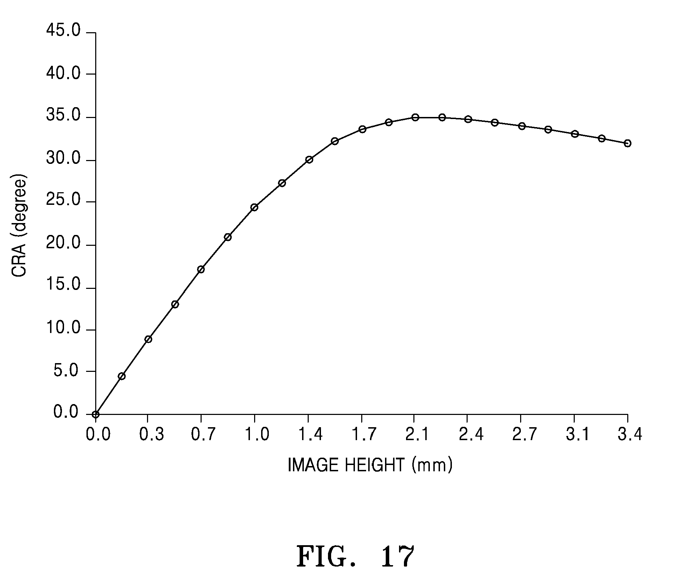

FIG. 14 is an aberration diagram of longitudinal spherical aberration, astigmatic field curvature, and distortion of the imaging lens 3000, according to the third exemplary embodiment. FIG. 15 is an aberration diagram of comatic aberration of the imaging lens 3000, according to the third exemplary embodiment. FIG. 16 is a diagram of negative TV distortion of the imaging lens 3000, according to the third exemplary embodiment. FIG. 17 is a graph of a CRA per field of the imaging lens 3000, according to the third exemplary embodiment.

Fourth Exemplary Embodiment

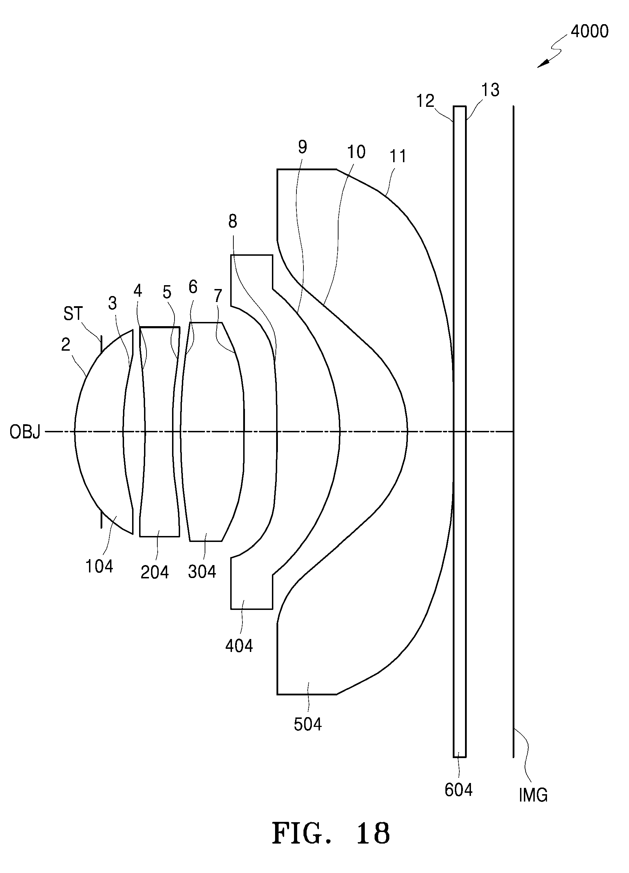

FIG. 18 is a diagram of an optical arrangement of an imaging lens 4000, according to a fourth exemplary embodiment.

The imaging lens 4000 includes, sequentially from the object OBJ to the image plane IMG, a first lens 104 having a convex surface toward object and positive refractive power, a second lens 204 having negative refractive power, a third lens 304 having positive refractive power, a fourth lens 404 having a convex surface toward image plane and positive refractive power, and a fifth lens 504 having negative refractive power.

Lens data of the fourth exemplary embodiment is as below.

[Table VII]

|  | Radius of Curvature | Thickness or Intervals | Refractive Index (nd) | Abbe Number (vd) |
| --- | --- | --- | --- | --- |
| OBJ | infinity | infinity |  |  |
| 1(ST) | infinity | -0.270 |  |  |
| 2* | 1.495 | 0.502 | 1.544 | 56.09 |
| 3* | 3.977 | 0.224 |  |  |
| 4* | -21.682 | 0.300 | 1.801 | 24.62 |
| 5* | 6.963 | 0.071 |  |  |
| 6* | 5.863 | 0.651 | 1.531 | 55.91 |
| 7* | -6.602 | 0.347 |  |  |
| 8* | -425.860 | 0.657 | 1.544 | 56.09 |
| 9* | -2.062 | 0.717 |  |  |
| 10* | -1.058 | 0.468 | 1.544 | 56.09 |
| 11* | -1000.000 | 0.041 |  |  |
| 12 | infinity | 0.100 | 1.517 | 64.2 |
| 13 | infinity | 0.488 |  |  |
| IMG | infinity | 0.000 |  |  |

[Table VIII]

| Surface | K | A | B | C | D | E | F | G |
|---|---|---|---|---|---|---|---|---|
| 2 | 2.7019E-01 | 2.2348E-03 | 2.2043E-02 | -1.1505E-02 | 1.6274E-02 | 5.4454E-03 | 1.3662E-02 | 3.5333E-03 |
| 3 | -1.9353E+01 | 5.2206E-02 | -2.3017E-02 | 5.6891E-02 | -1.0194E-01 | 9.6877E-02 | 8.8656E-03 | 2.0839E-04 |
| 4 | -1.0000E+00 | -4.4088E-02 | 3.9707E-03 | -2.6255E-02 | 1.1475E-03 | -1.5211E-02 | -1.4055E-03 | 3.5919E-05 |
| 5 | -8.7162E+00 | -7.9075E-03 | 4.4961E-02 | -2.1979E-02 | 1.2432E-02 | 1.1375E-02 | -1.1584E-02 | 5.3190E-03 |
| 6 | -9.1637E+01 | 1.1134E-02 | 1.4241E-02 | -3.3876E-02 | 1.1564E-02 | 4.1236E-02 | -2.8357E-02 | 1.6001E-03 |
| 7 | 1.2275E+01 | -4.7579E-02 | -1.4012E-02 | 7.2495E-03 | -7.6764E-03 | -3.4497E-03 | 6.8258E-04 | 3.4521E-03 |
| 8 | -1.0000E+00 | -5.1562E-02 | -2.5060E-02 | 7.3033E-03 | -1.4279E-02 | 2.6164E-03 | 1.8457E-03 | -1.9332E-03 |
| 9 | - 7.0115E+00 | -9.3975E-02 | 2.6817E-02 | -1.6698E-02 | 4.9799E-03 | -4.9339E-04 | 3.4578E-05 | 3.0519E-05 |
| 10 | -9.2099E-01 | -3.2901 E-02 | 9.1875E-03 | 2.7016E-03 | 3.7786E-04 | 4.6757E-05 | -1.5877E-05 | -6.1569E-06 |
| 11 | 2.0022E+01 | -4.5026E-02 | 1.3728E-02 | -2.8759E-03 | 3.0706E-04 | -1.3775E-05 | -8.8518E-07 | 1.0062E-07 |

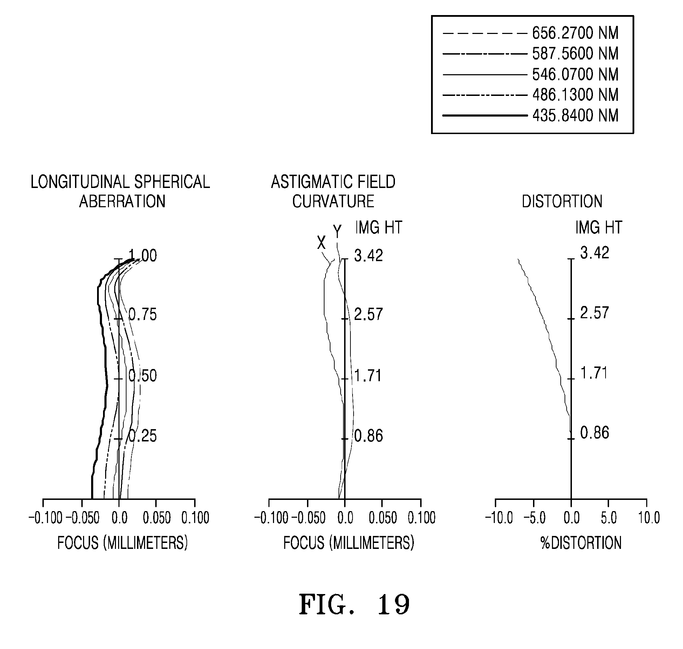

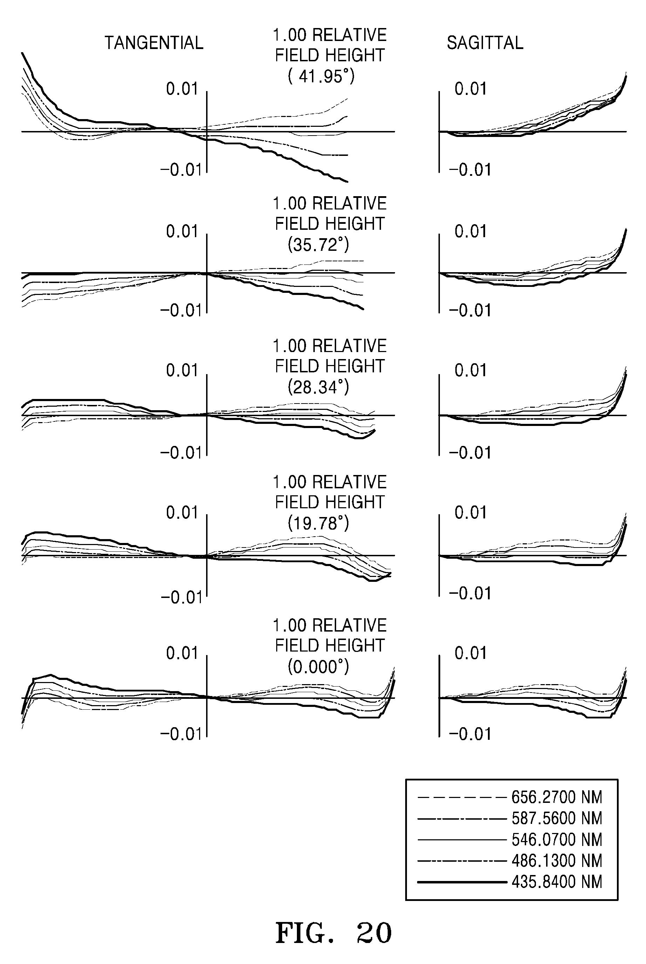

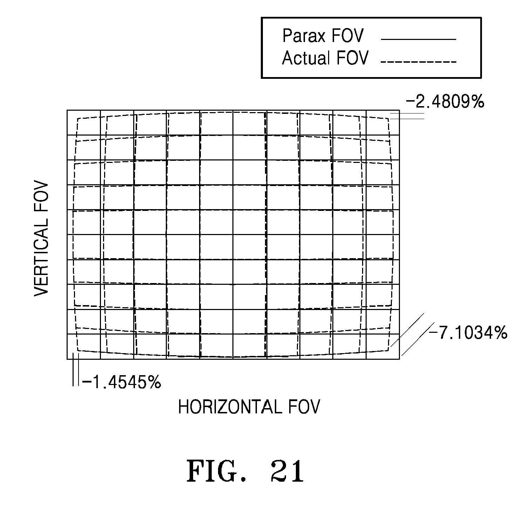

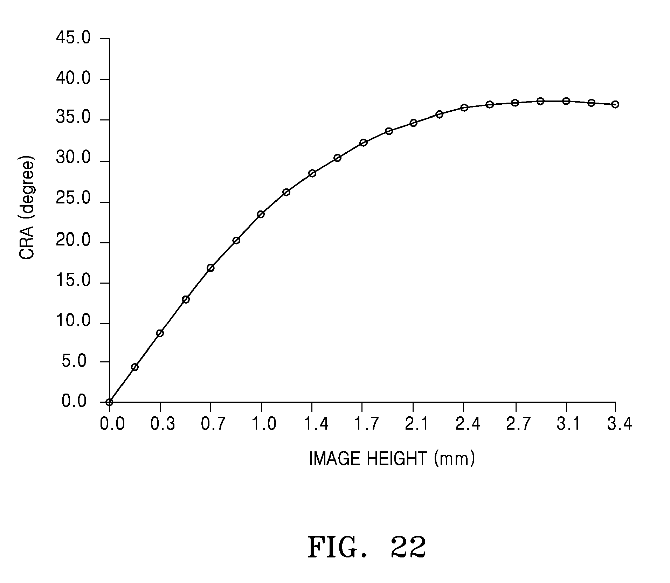

FIG. 19 is an aberration diagram of longitudinal spherical aberration, astigmatic field curvature, and distortion of the imaging lens 4000, according to the fourth exemplary embodiment. FIG. 20 is an aberration diagram of comatic aberration of the imaging lens 4000, according to the fourth exemplary embodiment. FIG. 21 is a diagram of negative TV distortion of the imaging lens 4000, according to the fourth exemplary embodiment. FIG. 22 is a graph of a CRA per field of the imaging lens 4000, according to the fourth exemplary embodiment.

Fifth Exemplary Embodiment

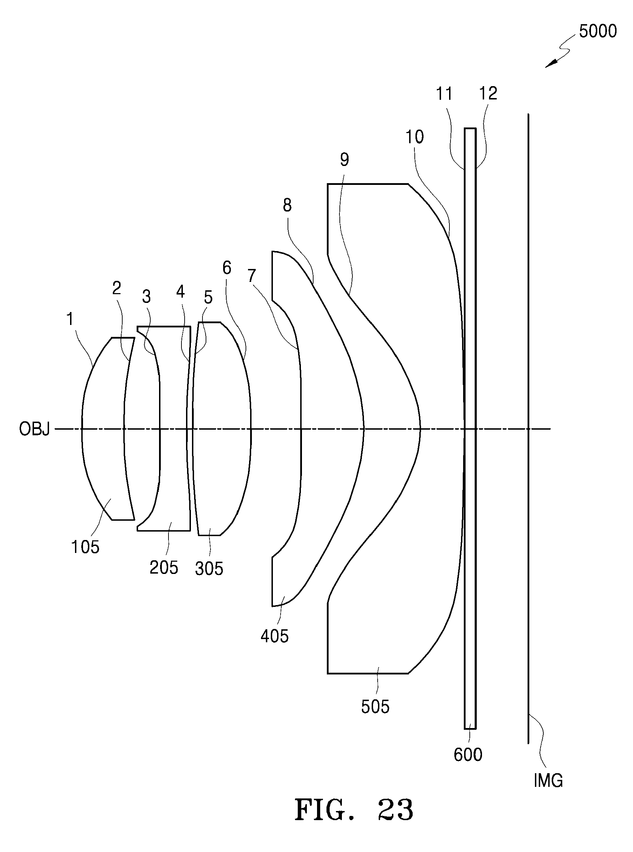

FIG. 23 is a diagram of an optical arrangement of an imaging lens 5000, according to a fifth exemplary embodiment.

The imaging lens 5000 includes, sequentially from the object OBJ to the image plane IMG, a first lens 105 having a convex surface toward object and positive refractive power, a second lens 205 having negative refractive power, a third lens 305 having positive refractive power, a fourth lens 405 having a convex surface toward image plane IMG and positive refractive power, and a fifth lens 505 having negative refractive power.

Lens data of the fifth exemplary embodiment is as below.

[Table IX]

|  | Radius of Curvature | Thickness or Intervals | Refractive Index (nd) | Abbe Number (vd) |
|---|---|---|---|---|
| OBJ | infinity | infinity |  |  |
| 1 * | 1.655 | 0.470 | 1.544 | 56.09 |
| 2(ST)* | 3.751 | 0.384 |  |  |
| 3* | -19.592 | 0.290 | 1.643 | 22.4 |
| 4* | 5.087 | 0.055 |  |  |
| 5* | 5.406 | 0.646 | 1.544 | 56.09 |
| 6* | -3.971 | 0.529 |  |  |
| 7* | 54.118 | 0.686 | 1.544 | 56.09 |
| 8* | -2.102 | 0.603 |  |  |
| 9* | -1.092 | 0.470 | 1.544 | 56.09 |
| 10* | -47.900 | 0.040 |  |  |
| 11 | infinity | 0.110 | 1.517 | 64.2 |
| 12 | infinity | 0.568 |  |  |
| IMG | infinity | 0.000 |  |  |

[Table X]

| Surface | K | A | B | C | D | E | F | G |
|---|---|---|---|---|---|---|---|---|
| 1 | 1.6636E-01 | -5.6568E-03 | 5.9585E-02 | -2.5924E-01 | 6.8378E-01 | -9.9021E-01 | 7.4960E-01 | -2.3434E-01 |
| 2 | 3.3224E+01 | 8.4701E-02 | -1.8802E-01 | 5.8439E-01 | 1.3563E+00 | 1.8442E+00 | 1.3443E+00 | 3.7683E-01 |
| 3 | -3.6398E+01 | -1.0255E-01 | 5.5096E-02 | -1.1872E-01 | 1.4643E-01 | -1.1902E-01 | | |
| 4 | -1.1038E+00 | -1.3252E-01 | 2.4349E-01 | -3.7804E-01 | 6.2082E-01 | -8.0362E-01 | 6.5542E-01 | -2.3586E-01 |
| 5 | -4.6807E+01 | -7.2502E-02 | 1.2277E-01 | -1.3182E-01 | 9.7452E-02 | -9.0042E-02 | 8.5576E-02 | -3.1506E-02 |
| 6 | -2.9675E+01 | -1.1385E-01 | 3.2069E-02 | 1.3279E-02 | -1.3042E-01 | 1.8851E-01 | -1.2802E-01 | 3.4162E-02 |
| 7 | -9.9000E+01 | -5.9598E-02 | 1.3496E-02 | -1.2337E-02 | -9.3661E-03 | 1.5149E-02 | -8.7537E-03 | 1.7280E-03 |
| 8 | -8.7039E+00 | -1.0249E-01 | 8.1231E-02 | -6.3081E-02 | 3.2671E-02 | -8.7942E-03 | 1.1409E-03 | -6.4613E-05 |
| 9 | -2.1110E+00 | -2.9682E-02 | 2.4721E-02 | -5.0536E-02 | 4.3428E-02 | -1.5865E-02 | 2.6859E-03 | -1.7617E-04 |
| 10 | 9.9000E+01 | 2.8949E-02 | -2.6613E-02 | 1.0014E-02 | -2.2761E-03 | 3.0605E-04 | -2.3029E-05 | 7.5744E-07 |

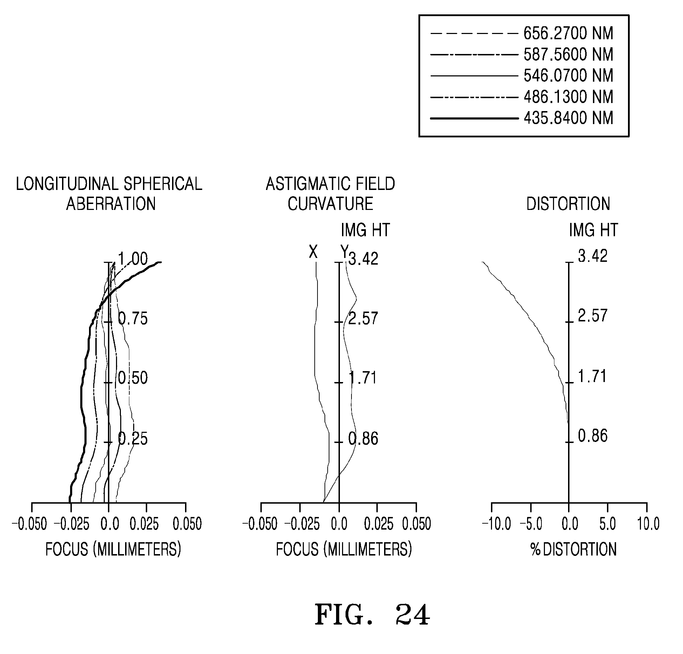

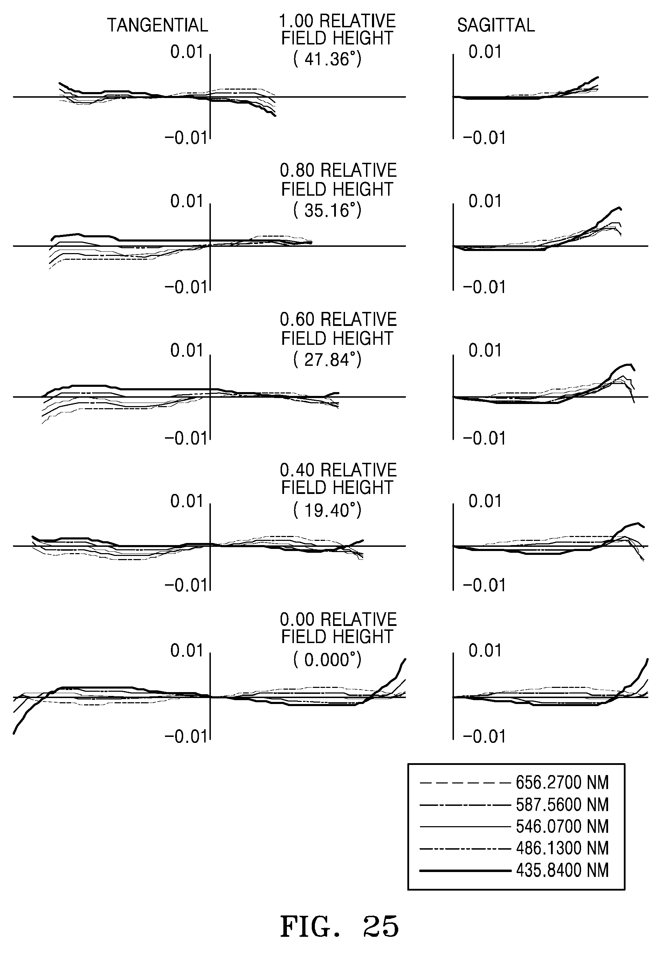

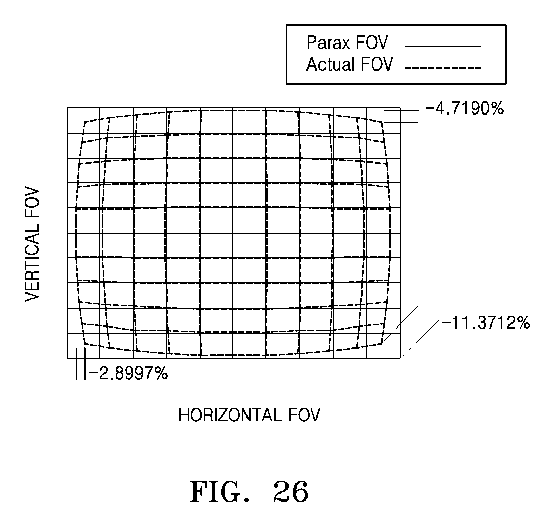

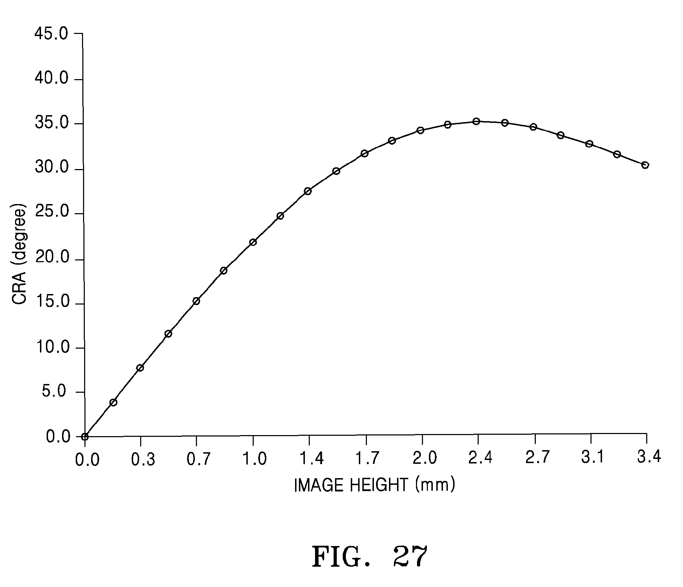

FIG. 24 is an aberration diagram of longitudinal spherical aberration, astigmatic field curvature, and distortion of the imaging lens 5000, according to the fifth exemplary embodiment. FIG. 25 is an aberration diagram of comatic aberration of the imaging lens 5000, according to the fifth exemplary embodiment. FIG. 26 is a diagram of negative TV distortion of the imaging lens 5000, according to the fifth exemplary embodiment. FIG. 27 is a graph of a CRA per field of the imaging lens 5000, according to the fifth exemplary embodiment.

Table XI shows various optical specifications of the imaging lenses 1000 to 5000 according to the first to fifth exemplary embodiments, for example, optical total lengths (TL), focal lengths (f), half FOV ($\theta$), respective focal lengths (f1, f2, f3, f4, and f5) of the imaging lenses 1000 to 5000, etc.

[Table XI]

| Specification | Embodiment 1 | Embodiment 2 | Embodiment 3 | Embodiment 4 | Embodiment 5 |
|---|---|---|---|---|---|
| Optical Total Length (TL) | 4.73 mm | 4.45 mm | 4.45 mm | 4.57 mm | 4.85 mm |
| Focal Length(f) | 3.99 mm | 3.47 mm | 3.47 mm | 3.80 mm | 3.88 mm |
| Half FOV ($\theta$) | 40.60 deg | 44.58 deg | 44.58 deg | 41.95 deg | 41.40 deg |
| Focal Length of First Lens (f1) | 4.17 mm | 17.17 mm | 4.48 mm | 4.09 mm | 5.02 mm |
| Focal Length of Second Lens (f2) | -6.43 mm | 3.37 mm | 9.67 mm | -6.49 mm | -6.19 mm |
| Focal Length of Third Lens (f3) | 6.64 mm | -5.32 mm | -10.66 mm | 5.93 mm | 4.29 mm |
| Focal Length of Fourth Lens (f4) | 3.99 mm | 2.72 mm | 2.86 mm | 3.79 mm | 3.72 mm |
| Focal Length of Fifth Lens (f5) | -2.04 mm | -2.00 mm | -1.99 mm | -1.94 mm | -2.05 mm |
| Object Side Radius of First Lens (R1) | 1.50 mm | 2.17 mm | 1.78 mm | 1.50 mm | 1.66 mm |
| Object side Radius of Fifth Lens ($R_9$) | -1.11 mm | -1.09 mm | -1.09 mm | -1.06 mm | -1.09 mm |
| Image Side Radius of Fifth Lens ($R_{10}$) | infin ity | infin ity | infin ity | -1000.00 mm | -47.90 mm |
| EPD | 1.69 mm | 1.45 mm | 1.46 mm | 1.69 mm | 1.95 mm |
| Tan$\theta$ | 0.857 | 0.986 | 0.986 | 0.899 | 0.882 |
| $CRA_{max}$ | 34.5° | 35° | 35° | 37.4° | 35.04° |

Table XII shows the imaging lenses 1000 to 5000 of the first to fifth exemplary embodiments satisfying CONDs. (1) to (13).

[Table XII]

| Conditions | Embodiment 1 | Embodiment 2 | Embodiment 3 | Embodiment 4 | Embodiment 5 |
|---|---|---|---|---|---|
| (1) $-0.2 \leq (Y-y_p)/y_p \leq -0.05$ | -0.079 | -0.134 | -0.134 | -0.07 | -0.11 |
| (2) $(((1/f)*(Y/\tan\theta))-1)*100$ | -7.90% | -13.40% | -13.40% | -7.00% | -11.00% |
| (3) $0.80 < TL/f < 1.5$ | 1.18 | 1.28 | 1.28 | 1.2 | 1.25 |
| (4) $0.7 < f/f_4 < 2.5$ | 1.11 | 1.27 | 1.21 | 1 | 1.04 |
| (5) $1.0 < |f/f_5| < 4.0$ | 2.05 | 1.74 | 1.74 | 1.96 | 1.89 |
| (6) $0.2 < R1/f < 1.0$ | 0.37 | 0.63 | 0.51 | 0.39 | 0.43 |
| (7) $f/EPD \leq 2.5$ | 2.39 | 2.39 | 2.38 | 2.25 | 1.99 |

(continued)

| Conditions | Embodiment 1 | Embodiment 2 | Embodiment 3 | Embodiment 4 | Embodiment 5 |
|---|---|---|---|---|---|
| (8) $1.6 \leq N_{1-4} \leq 2.2$ | 2.017 | 1.643 | 2.1 | 1.801 | 1.643 |
| (9) $15 \leq V_{1-1} \leq 29$ | 20.55 | 22.4 | 16.8 | 24.62 | 22.4 |
| (10) $1.51 < N5 < 1.56$ | 1.544 | 1.544 | 1.544 | 1.544 | 1.544 |
| (11) $30° \leq CRA_{max}\ 45°$ | 34.5° | 35° | 35° | 37.4° | 35.04° |
| (12) $TL/(2*yp)$ | 0.691 | 0.651 | 0.651 | 0.667 | 0.709 |
| (13) $(R_9+R_{10})/(R_9-R_{10})$ | -1.000 | -1.000 | -1.000 | -1.002 | -1.047 |

The imaging lenses 1000 to 5000 of the above-described exemplary embodiments have very short total lengths and satisfactory optical performance.

The above-described imaging lens includes five lenses, and has a total length that is appropriate for an ultra slim electronic device.

Also, since the lenses in the imaging lens have aspheric surfaces, the imaging lens has a reduced total length and a shape that is appropriate for aberration correction. Thus, high image quality may be obtained not only in the center of the image lens but also within a wide FOV range.

The above-described exemplary embodiments may be applied to various types of imaging apparatuses and image sensors that convert an optical image formed on the imaging lens into an electric signal. Also, the imaging apparatuses may be included in ultra slim electronic devices.

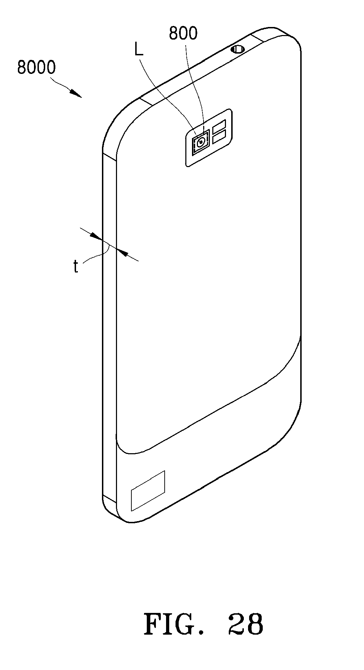

FIG. 28 is a perspective view of an electronic device 8000 according to an exemplary embodiment.

The electronic device 8000 may have a body thickness t of about 7 mm or less. The electronic device 8000 may be a very slim mobile communication device, for example, a smartphone. An imaging lens L and an image sensor 800 are provided inside the electronic device 8000. The imaging lens L may be any one of the above-described imaging lenses 1000, 2000, 3000, 4000, and 5000. Since a total length of the imaging lens L is very short, about 5 mm or less, the imaging lens may be arranged in the electronic device 8000 such that an optical axis direction of the imaging lens corresponds to a direction of the body thickness t.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the spirit and scope as defined by the following claims.

**Claims**

1.  An imaging lens comprising:

   a first lens having a convex surface toward an object and positive refractive power;
   a second lens having positive or negative refractive power;
   a third lens having positive or negative refractive power;
   a fourth lens having a convex surface toward an image plane and positive refractive power; and
   a fifth lens having a concave surface toward an object and negative refractive power,
   wherein the first lens, the second lens, the third lens, the fourth lens, and the fifth lens are arranged in order from an object to an image plane,
   wherein the imaging lens satisfies:

$$-0.2 \leq (Y-y_p)/y_p \leq -0.05,$$

   wherein Y indicates an image height of a real chief ray, and $y_p$ indicates an image height of a paraxial chief ray.

2.  The imaging lens of claim 1, wherein the imaging lens satisfies:

$$0.8 < TL/f < 1.5,$$

wherein TL indicates a distance along an optical axis between a vertex of an object side surface of the first lens to the image plane, and f indicates a focal length of the imaging lens.

3. The imaging lens of any one of preceding claims, wherein the imaging lens satisfies:

$$0.7 < f/f4 < 2.5,$$

wherein f indicates a focal length of the imaging lens, and f4 indicates a focal length of the fourth lens.

4. The imaging lens of any one of preceding claims, wherein the imaging lens satisfies:

$$1.0 < |f/f5| < 4.0,$$

wherein f indicates a focal length of the imaging lens, and f5 indicates a focal length of the fifth lens.

5. The imaging lens of any one of preceding claims, wherein the imaging lens satisfies:

$$0.2 < R1/f < 1.0,$$

wherein R1 indicates a radius of curvature of the object side surface of the first lens, and f indicates a focal length of the imaging lens.

6. The imaging lens of any one of preceding claims, wherein the imaging lens satisfies:

$$f/EPD \leq 2.5,$$

wherein f indicates a focal length of the imaging lens, and EPD indicates a diameter of an entrance pupil of the imaging lens.

7. The imaging lens of any one of preceding claims, wherein one of the second and third lenses has positive refractive power and the other of the second and third lenses has negative refractive power.

8. The imaging lens of claim 7, wherein the imaging lens satisfies:

$$1.6 \leq N_{1-4} \leq 2.2,$$

and

$$15 \leq V_{1-4} \leq 29,$$

wherein $N_{1-4}$ and $V_{1-4}$ respectively are a refractive index and an Abbe number of a lens having negative refractive power from among the second lens and the third lens.

9. The imaging lens of any one of preceding claims, wherein the imaging lens satisfies:

$$1.51 < N_5 < 1.56,$$

wherein $N_5$ indicates a refractive index of the fifth lens.

10. The imaging lens of any one of preceding claims, wherein each of the first to fifth lenses has at least one aspheric surface.

11. The imaging lens of claim any one of preceding claims, wherein an image side surface of the fifth lens is an aspheric surface without an inflection point.

12. The imaging lens of any one of preceding claims, wherein the imaging lens satisfies:

$$30° \leq CRA_{max} \leq 45°,$$

and

$$0.5 < TL/(2*y_p) < 0.75,$$

wherein $CRA_{max}$ indicates a maximum value of a chief ray angle (CRA) incident to the image plane according to image heights, TL indicates a distance along an optical axis between a vertex of an object side surface of the first lens to the image plane, and $y_p$ indicates an image height of a paraxial chief ray.

13. The imaging lens of claim 12, wherein the imaging lens satisfies:

$$-1.6 < (R_9+R_{10})/(R_9-R_{10}) < -0.7,$$

wherein $R_9$ indicates a radius of curvature of an object side surface of the fifth lens, and $R_{10}$ indicates a radius of curvature of an image side surface of the fifth lens.

14. An imaging apparatus comprising:

an imaging lens of any one of preceding claims; and
an image sensor configured to convert an optical image formed by the imaging lens into an electric signal.

15. The imaging apparatus of claim 14, further comprising a body having a body thickness of 7 mm or less, and the imaging lens is arranged such that an optical axis direction of the imaging lens corresponds to a direction of the body thickness.

FIG. 1

Paraxial chief ray

Distortion(negative)

$y_P = f * \tan\theta$

Real chief ray

Y

IMG

FIG. 2

CRA

Upper marginal Ray

Chief Ray

Lower marginal Ray

IMG

FIG. 3

FIG. 4

FIG. 5

FIG. 6

FIG. 7

FIG. 8

FIG. 9

FIG. 10

FIG. 11

FIG. 12

FIG. 13

------- 656.2700 NM
------- 587.5600 NM
——————— 546.0700 NM
--------- 486.1300 NM
——————— 435.8400 NM

LONGITUDINAL SPHERICAL
ABERRATION

1.00

0.75

0.50

0.25

-0.100-0.050 0.0 0.050 0.100
FOCUS (MILLIMETERS)

ASTIGMATIC FIELD
CURVATURE

IMG HT
X  Y  3.42

2.57

1.71

0.86

-0.100-0.050 0.0 0.050 0.100
FOCUS (MILLIMETERS)

DISTORTION

IMG HT
3.42

2.57

1.71

0.86

-10.0 -5.0 0.0 5.0 10.0
%DISTORTION

FIG. 14

Y-FAN

1.00 RELATIVE
FIELD HEIGHT
( 44.58° )

X-FAN

0.80 RELATIVE
FIELD HEIGHT
( 38.26° )

0.60 RELATIVE
FIELD HEIGHT
( 30.60° )

0.40 RELATIVE
FIELD HEIGHT
( 21.52° )

0.00 RELATIVE
FIELD HEIGHT
( 0.000° )

| | 656.2700 NM |
| | 587.5600 NM |
| | 546.0700 NM |
| | 486.1300 NM |
| | 435.8400 NM |

FIG. 15

FIG. 16

FIG. 17

FIG. 18

656.2700 NM
587.5600 NM
546.0700 NM
486.1300 NM
435.8400 NM

LONGITUDINAL SPHERICAL
ABERRATION

ASTIGMATIC FIELD
CURVATURE

DISTORTION

FIG. 19

FIG. 20

Parax FOV ————————
Actual FOV ———————

−2.4809%

VERTICAL FOV

−7.1034%

−1.4545%

HORIZONTAL FOV

FIG. 21

FIG. 22

FIG. 23

656.2700 NM
587.5600 NM
546.0700 NM
486.1300 NM
435.8400 NM

LONGITUDINAL SPHERICAL
ABERRATION

ASTIGMATIC FIELD
CURVATURE
IMG HT

DISTORTION
IMG HT

X  Y 3.42

3.42

1.00

2.57

2.57

0.75

1.71

1.71

0.50

0.86

0.86

0.25

-0.050 -0.025 0.0 0.025 0.050
FOCUS (MILLIMETERS)

-0.050 -0.025 0.0 0.025 0.050
FOCUS (MILLIMETERS)

-10.0 -5.0 0.0 5.0 10.0
% DISTORTION

FIG. 24

TANGENTIAL

1.00 RELATIVE
FIELD HEIGHT
( 41.36° )

SAGITTAL

0.80 RELATIVE
FIELD HEIGHT
( 35.16° )

0.60 RELATIVE
FIELD HEIGHT
( 27.84° )

0.40 RELATIVE
FIELD HEIGHT
( 19.40° )

0.00 RELATIVE
FIELD HEIGHT
( 0.000° )

656.2700 NM
587.5600 NM
546.0700 NM
486.1300 NM
435.8400 NM

FIG. 25

FIG. 26

FIG. 27

FIG. 28

Europäisches
Patentamt

European
Patent Office

Office européen
des brevets

# EUROPEAN SEARCH REPORT

**Application Number**

EP 16 15 0697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/240853 A1 (KUBOTA YOJI [JP] ET AL) 28 August 2014 (2014-08-28)<br><br>* paragraphs [0056] - [0066], [0078] - [0094]; figures 1,4,7,10,13; examples 1,2 * | 1-3,6-8, 10,11, 13-15 | INV.<br>G02B13/00<br>G02B9/60 |
| X | US 2010/214467 A1 (OHTSU TAKUYA [JP]) 26 August 2010 (2010-08-26)<br><br>* paragraphs [0108], [0144], [0145], [0161]; figures 9,10; example 5 * | 1,2,4,5, 8,9,12, 14,15 | |

**TECHNICAL FIELDS SEARCHED (IPC)**

G02B

The present search report has been drawn up for all claims

| Place of search | Date of completion of the search | Examiner |
|---|---|---|
| Munich | 2 June 2016 | Casse, Martin |

EPO FORM 1503 03.82 (P04C01)

## ANNEX TO THE EUROPEAN SEARCH REPORT
## ON EUROPEAN PATENT APPLICATION NO.

EP 16 15 0697

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2016

| Patent document cited in search report | | | Publication date | Patent family member(s) | | | Publication date |
|---|---|---|---|---|---|---|---|
| US 2014240853 | A1 | | 28-08-2014 | CN | 203324564 | U | 04-12-2013 |
| | | | | JP | 2014164287 | A | 08-09-2014 |
| | | | | US | 2014240853 | A1 | 28-08-2014 |
| US 2010214467 | A1 | | 26-08-2010 | JP | 2010197665 | A | 09-09-2010 |
| | | | | US | 2010214467 | A1 | 26-08-2010 |
| | | | | US | 2012224091 | A1 | 06-09-2012 |
| | | | | US | 2012293682 | A1 | 22-11-2012 |
| | | | | US | 2013293756 | A1 | 07-11-2013 |
| | | | | US | 2015146076 | A1 | 28-05-2015 |

EPO FORM P0459

For more details about this annex : see Official Journal of the European Patent Office, No. 12/82

**EP 3 048 464 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150009339